# EUROPÄISCHE PATENTSCHRIFT

(11) **EP 2 818 653 B1**
(45) Veröffentlichungstag und Bekanntmachung des Hinweises auf die Patenterteilung: **18.03.2020**
(21) Anmeldenummer: 14171911.2
(22) Anmeldetag: 11.06.2014
(51) Int. Cl.: F01M 13/04

(54) **Rückschlagventil für einen Ölrücklauf in der Kurbelgehäuseentlüftung eines Verbrennungsmotors**
Check valve for oil return in the crankcase ventilation system of an internal combustion engine
Clapet anti-retour pour retour huile dans le système de blowby du carter d'un moteur à combustion interne

(30) Priorität: 25.06.2013 DE 102013212104
(43) Veröffentlichungstag der Anmeldung: 31.12.2014
(73) Patentinhaber: BRUSS Sealing Systems GmbH, 22955 Hoisdorf (DE)
(72) Erfinder: Brand, Manfred, 22967 Tremsbüttel (DE); Petigk, Dörte, 22955 Hoisdorf (DE); Schrader, Thomas, 21029 Hamburg (DE)
(74) Vertreter: Müller Verweyen

(56) Entgegenhaltungen:
- EP-A1- 1 147 992
- EP-A2- 1 559 876
- DE-A1-102010 027 787
- FR-A1- 2 932 843
- JP-A- 2002 322 944
- US-A1- 2002 066 424
- US-B1- 6 293 268

## Beschreibung

Die Erfindung betrifft ein Rückschlagventil für einen Ölrücklauf in der Kurbelgehäuseentlüftung eines Verbrennungsmotors, umfassend ein Ventilgehäuse und einen Ventilkörper, der in dem Ventilgehäuse zwischen einer Offenstellung und einer Schließstellung verschiebbar gehalten ist, wobei der Ventilkörper im Ruhezustand des Verbrennungsmotors vorspannungsfrei in der Offenstellung gehalten ist und infolge eines Überdrucks an der Kurbelgehäuseseite gegenüber dem Ölabscheiderraum zur selbsttätigen Verschiebung in die Schließstellung eingerichtet ist.

Um ein Eintreten von Öl aus dem Kurbelgehäuse durch den Ölrücklauf in den Reinraum des Ölabscheiders und somit in den Ansaugtrakt sicher zu verhindern, wird herkömmlich beispielsweise ein Siphon in dem Ölrücklauf angeordnet, siehe DE 198 13 702 C1; DE 20 2004 004 803 U1, Fig. 7; DE 10 2004 006 082 A1. Aufgrund der in dem Siphon jederzeit vorhandenen Ölmenge ist die Gefahr des Einfrierens und somit der Funktionsunfähigkeit des Ölrücklaufs gegeben. Gleiches gilt für die Ausführungsform gemäß Fig. 13 aus DE 20 2004 004 803 U1, wo ein Sinterkörper in dem Ölrücklauf angeordnet ist.

Des Weiteren sind Rückschlagventile für den Ölrücklauf eines Ölabscheiders in der Kurbelgehäuseentlüftung eines Verbrennungsmotors generell bekannt.

Gängig sind beispielsweise Rückschlagventile mit einem schirmoder tellerförmigen Elastomerkörper, der in der Ruhestellung des Motors in der Schließstellung ist und bei einem Unterdruck im Kurbelgehäuse und/oder bei einem bestimmten Füllstand in einem Ölreservoir selbsttätig öffnet, siehe US 4 602 595; WO 98 32955 A1; DE 10 2004 002 310 A1; DE 20 2004 004 803 U1, Fig. 14; WO 2004 090292 A2. Bei dieser nicht gattungsgemäßen Bauart besteht die Gefahr des Einfrierens im Ruhezustand des Motors, da das Öl nicht abfließen kann.

Ähnliches gilt für herkömmliche Federzungenventile, die in der Ruhestellung des Motors in der Schließstellung sind und sich bei einem Unterdruck im Kurbelgehäuse und/oder bei einem bestimmten Füllstand in einem Ölreservoir selbsttätig öffnen, siehe DE 10 2004 061 938 B3; EP 1 614 871 A2; DE 10 2006 038 700 A1, Fig. 4; DE 10 2007 017 235 A1; DE 10 2007 058 059 A1; DE 10 2007 008 672 A1; DE 10 2008 019 293 A1.

Die Federmembran gemäß DE 296 05 425 U1 befindet sich zwar im unbelasteten Zustand durch ihr Eigengewicht in einer Offenstellung. Allerdings hängt die Federmembran in der Offenstellung frei nach unten, so dass die Offenstellung nicht wohldefiniert ist. Beispielsweise infolge von Alterung oder starker Beanspruchung kann ein Absinken der Federzunge nicht verhindert werden, wodurch die Funktionsfähigkeit des Rückschlagventils gefährdet sein kann.

DE 20 2007 011 585 U1 offenbart ein Ölrücklaufventil mit einem in einem Gehäuse angeordneten Schwimmerkörper, der eine Ablauföffnung in dem Gehäuse bei Überschreiten eines definierten Ölpegels durch Auftrieb freigibt und bei Unterschreiten eines definierten Ölpegels schwerkraftbedingt verschließt.

EP 1 090 210 B1 offenbart einen Zyklonabscheider mit einer im Ölrücklauf angeordneten Ventilkugel, die im Ruhezustand des Motors schwerkraftbedingt den Ölrücklauf verschließt.

Sämtlichen der vorgenannten Rückschlagventile ist gemeinsam, dass sie im Ruhezustand des Motors nicht den maximalen Öffnungsquerschnitt bereitstellen, was sich negativ auf das Einfrierverhalten auswirkt.

Eine andere, ebenfalls nicht gattungsgemäße Bauart sieht ein gesteuertes Rückschlagventil vor, das mittels Fremdenergie, beispielsweise Druckluft oder Magnetkraft, fremdgesteuert geöffnet wird, siehe DE 195 15 482 A1; DE 202 17 601 U1; DE 203 02 911 U1; DE 10 2004 018 567 B3. Die Realisierung derartiger fremdgesteuerter Ventile ist jedoch sehr aufwändig. Gleiches gilt für mittels einer Pumpe gesteuerte Federzungenventile gemäß DE 20 2004 004 902 U1 und DE 10 2008 019 293 A1.

Ein gattungsgemäßes Ölrücklauf-Rückschlagventil ist aus der DE 196 28 812 B4 bekannt. Das Rückschlagventil umfasst ein Gehäuse und einen innerhalb des Gehäuses als Ganzes beweglich gelagerten Ventilkörper, wobei der Ventilkörper im Ruhezustand des Motors einen maximalen Öffnungsquerschnitt freigibt und im Betrieb bei einem Überdruck im Kurbelgehäuse relativ zu dem Ölabscheider angehoben wird, wodurch eine Durchgangsöffnung verschlossen wird. Dieses Ventil wird in eine Aufnahme des Kurbelgehäuses eingesetzt, wobei über den Außenumfang des Ventilgehäuses umlaufende Dichtlippen vorgesehen sind, die einen geringfügig größeren Außendurchmesser als der Durchmesser der Aufnahme aufweisen, so dass das Gehäuse unter Reibschluss dichtend und justierbar in die Aufnahme eindrückbar ist. Je nach Einbauort ist es jedoch schwierig, einen Platz für das Rückschlagventil in dem Kurbelgehäuse zu finden. Des Weiteren bedeutet das Rückschlagventil für den Motorhersteller ein zusätzlich zu verbauendes Bauteil. Schließlich ist der Aufwand zum Entfernen des Rückschlagventils aus dem Kurbelgehäuse im Falle einer Fehlfunktion oder eines Defekts hoch.

Aus der US 2002/0066424 A1 ist eine Zylinderkopfhaube mit einem gattungsgemäßen Ölrücklauf-Rückschlagventil bekannt, wobei das Ölrücklauf-Rückschlagventil eine Gummiringdichtung mit einem ersten und einem zweiten Anschlag für einen Ventilkolben aufweist, wobei sich der Ventilkolben in der unteren Endposition durch die Schwerkraft in einer geöffnet Ventilstellung befindet und durch einen Überdruck in die obere, geschlossene Ventilstellung verschiebbar ist.

FR 2 932 843 A1 offenbart ein Rückschlagventil für einen Ölrücklauf in der Kurbelgehäuseentlüftung eines Kraftfahrzeugs, wobei das Ventilgehäuse an seinem Endabschnitt eine Mehrzahl voneinander beabstandete, axiale Stege aufweist, zwischen denen der Ventilkörper axial verschiebbar gehalten ist und die Stege einen Sitz für den Ventilkörper ausbilden.

Die Aufgabe der Erfindung besteht darin, ein Rückschlagventil bereitzustellen, das dem Motorenhersteller keine besonderen Anforderungen auferlegt und erforderlichenfalls mit relativ geringem Aufwand entfernt werden kann.

Die Erfindung löst diese Aufgabe mit den Merkmalen des unabhängigen Anspruchs 1. Das Rückschlagventil ist erfindungsgemäß zum Einsetzen in eine Zylinderkopfhaube des Verbrennungsmotors vorgesehen und eingerichtet, so dass an den Motorhersteller keinerlei Anforderungen gestellt werden müssen, da das Rückschlagventil bereits bei der Herstellung der Zylinderkopfhaube verbaut und mit der Zylinderkopfhaube geliefert wird. Im Falle einer Fehlfunktion oder eines Defekts kann das Rückschlagventil mit wesentlich geringerem Aufwand aus der Zylinderkopfhaube entfernt bzw. mit der gesamten Zylinderkopfhaube ausgetauscht werden.

Erfindungsgemäß ist der Ventilkörper im Ruhezustand des Verbrennungsmotors vorspannungsfrei, insbesondere schwerkraftbedingt, in der Offenstellung gehalten. Aufgrund des Verzichts auf eine Andruckfeder für den Ventilkörper kann dieser schnell von der Offenstellung in die Schließstellung verschoben werden. Auch bei lediglich geringen Druckunterschieden wird der Ventilkörper in die Schließstellung verschoben und verhindert ein Eindringen von ölbelastetem Gas aus dem Kurbelgehäuse in den Reinraum des Ölabscheiders.

Die Offen- und Schließstellung des Ventils wird allein durch Verschiebung des Ventilkörpers als Ganzes erreicht. "Als Ganzes" heißt, dass sämtliche mit dem Ventilkörper fest verbundenen Teile insgesamt verschoben werden. Insbesondere kann das Öffnen und Schließen des Strömungsquerschnitts ohne Verformung des Ventilkörpers erreicht werden, wie dies beispielsweise bei herkömmlichen Schirmventilen der Fall ist. Dadurch wird verformungsbedingter Verschleiß vermieden.

In einer vorteilhaften Ausführungsform weist das Ventilgehäuse Schraubmittel, insbesondere ein Gewinde, zum Einschrauben in die Aufnahme der Zylinderkopfhaube auf. Andere Befestigungen sind möglich. Das Ventilgehäuse kann alternativ in die Zylinderkopfhaube einsteckbar sein, was eine besonders schnelle Montage ermöglicht.

Erfindungsgemäß ist ein zwischen dem Ventilkörper und dem Ventilgehäuse wirkendes Rastmittel vorgesehen, um ein ungewolltes Lösen des Ventils im Betrieb zu verhindern. Alternativ kann an einem Bauteil der Zylinderkopfhaube ein Sicherungsmittel vorgesehen ist, das bei montiertem Bauteil so relativ zu dem Ventilgehäuse angeordnet ist, dass bei einer Lösebewegung des Ventilgehäuses dieses an dem Sicherungsmittel anschlägt. Insbesondere bei einem in die Aufnahme einsteckbaren Ventilgehäuse kann alternativ eine Klemmverbindung zwischen dem Ventilgehäuse und der Aufnahme vorgesehen sein.

Vorzugsweise ist der Ventilkörper ball- oder kugelförmig. Hierdurch kann im Vergleich zu einem mindestens abschnittsweise zylindrischen Ventilkörper die Bauhöhe des Ventils gegebenenfalls reduziert werden. Ballförmig ist dabei allgemein zu verstehen und umfasst beispielsweise auch ellipsoid- oder ovoidförmig.

Die Erfindung wird im Folgenden anhand bevorzugter Ausführungsformen unter Bezugnahme auf die beigefügten Figuren erläutert. Dabei zeigt:
- Fig. 1: eine Querschnittsansicht durch eine Zylinderkopfhaube;
- Fig. 2: eine Querschnittsansicht durch ein in eine Zylinderkopfhaube eingesetztes Rückschlagventil;
- Fig. 3: eine Draufsicht auf das Rückschlagventil aus Fig. 2;
- Fig. 4: eine perspektivische Draufsicht auf ein in eine Zylinderkopfhaube eingesetztes Rückschlagventil;
- Fig. 5: eine perspektivische Ansicht eines Rückschlagventils;
- Fig. 6: eine perspektivische Ansicht eines Rückschlagventils in einer weiteren Ausführungsform; und
- Fig. 7: eine perspektivische Ansicht einer Zylinderkopfhaube mit einem eingesetzten Rückschlagventil gemäß Fig 6.

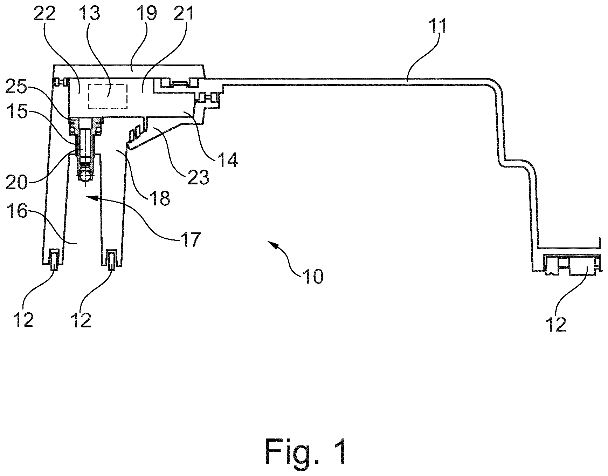

Die in Fig. 1 im Querschnitt gezeigte Zylinderkopfhaube 10 weist ein Gehäuse 11 auf, das beispielsweise aus einem thermoplastischen Kunststoff besteht, und ist über Dichtelemente 12 mit dem Zylinderkopf eines Verbrennungsmotors verbindbar. In einem Ölabscheideraum 22 der Zylinderkopfhaube 10 ist ein nur schematisch gezeigter Ölabscheider 13 angeordnet, dem über einen Gaseinlass Blowby-Gase aus dem Kurbelgehäuse des Verbrennungsmotors zugeleitet werden. Das gereinigte Gas gelangt von dem Ölabscheider 13 über einen Gasauslass in einen Reinraum 21 in der Zylinderkopfhaube 10 und wird von dort beispielsweise in den Ansaugtrakt des Verbrennungsmotors geleitet. Das abgeschiedene Öl kann in einem Sammelraum 14 gesammelt werden und wird über einen Ölrücklauf 17 in den Ölsumpf des Kurbelgehäuses zurückgeleitet. Der Ölrücklauf 17 umfasst eine Ölablassöffnung 15 in einem Gehäuseteil 18. Der Ölabscheideraum 22 ist in diesem Ausführungsbeispiel im Betrieb mit einem Deckel 19 verschlossen. Der Deckel 19 kann beispielsweise aus einem thermoplastischen Kunststoff bestehen und mit dem Gehäuse 11 verschweißt sein. Andere Befestigungen, beispielsweise mittels Schrauben, sind denkbar. Ölabscheideraum 22, Ölsammelraum 14 und Reinraum 21 können, wie in Fig. 1 gezeigt, von einem einheitlichen geschlossenen Funktionsraum in der Zylinderkopfhaube 10 gebildet sein, der in dieser Ausführung von dem Gehäuse 11, Gehäuseteilen 18, 23 und dem Deckel 19 umschlossen wird.

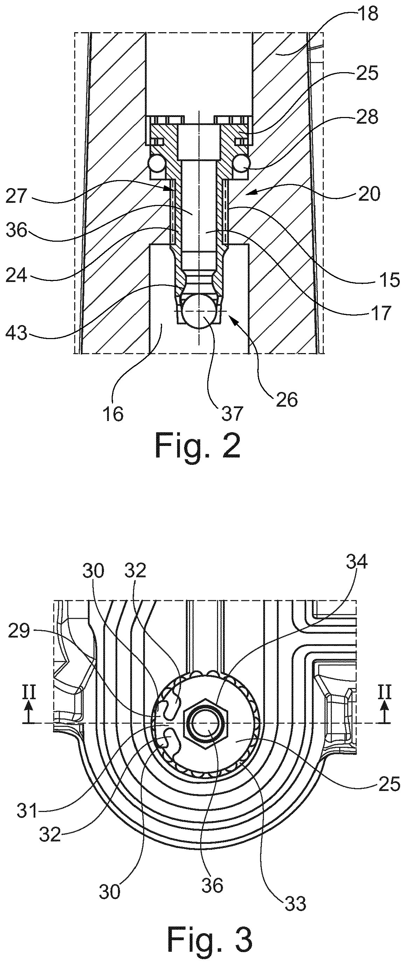

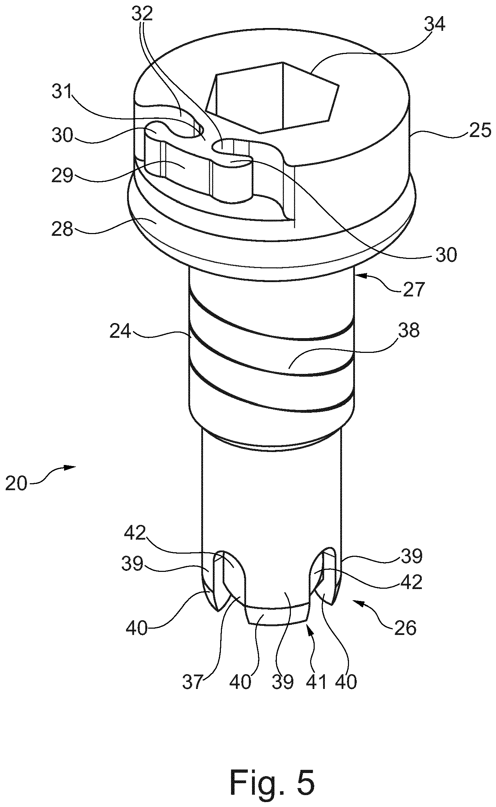

In dem Ölrücklauf 17 ist ein Rückschlagventil 20 angeordnet, das in den Fig. 2ff. genauer dargestellt ist. Das Rückschlagventil 20 ist vorteilhaft in der Ölablassöffnung 15 angeordnet, die somit eine Aufnahme für das Rückschlagventil 20 bildet. Es umfasst ein Ventilgehäuse 27 mit einem Schaft 24, einem an einem Ende des Schaftes 24 angeordneten Kopf 25 und einem am anderen Ende des Schaftes 24 angeordneten Endabschnitt 26. An der Außenseite des Schaftes 24 ist ein Schraubgewinde 38 vorgesehen (siehe Fig. 5), das mit einem entsprechenden Schraubgewinde an der Innenseite der Ölablassöffnung 15 zusammenwirkt.

Das Rückschlagventil 20 weist eine axiale Durchgangsbohrung 36 auf, die sich durch das gesamte Ventilgehäuse 27, d.h. vom Ventilkopf 25 durch den Schaft 24 bis zu dem Endabschnitt 26 erstreckt. Das Rückschlagventil 20 weist des Weiteren einen Ventilkörper 37 auf, der zwischen einer Offenstellung und einer Schließstellung verschiebbar ist, wie im Folgenden noch genauer erläutert wird. In der Offenstellung gestattet der Ventilkörper 37 den Abfluss von Öl aus dem Ölabscheideraum 22 bzw. dem Ölsammelraum 14 durch das Rückschlagventil bzw. die Durchgangsbohrung 36 auf die Kurbelgehäuseseite 16, um schließlich in den Ölsumpf des Kurbelgehäuses zu gelangen. Bei einem Überdruck auf der Kurbelgehäuseseite 16 des Rückschlagventils 20 relativ zu dem Abscheideraum 22 wird der Ventilkörper 37 in die Verschlussstellung verschoben, um einen ungewollten Transport von Öl vom Kurbelgehäuse in den Reinraum 21 durch die Ölablassöffnung 15 entgegen der Ölabflussrichtung zu verhindern.

Zur Montage wird das Rückschlagventil 20 von oben, d.h. von der Seite des Ölabscheiders 13, in die Ölablassöffnung bzw. Aufnahme 15 eingeschraubt, bis der Kopf 25 an dem die Aufnahme 15 bildenden Gehäuseteil 18 anschlägt. Zu diesem Zweck kann in dem Ventilkopf 25 eine Werkzeugaufnahme 34 zur Aufnahme eines Werkzeugs, beispielsweise eines Inbusschlüssels, vorgesehen sein.

Die Abdichtung zwischen dem Ventilgehäuse 27 und dem die Aufnahme 15 bildenden Gehäuseteil 18 erfolgt hier mittels eines Dichtrings 28, der beispielsweise an dem Ventilkopf 25 angeordnet ist, wobei eine Anordnung im Bereich des Schafts 24 nicht ausgeschlossen ist. Die Abdichtung zwischen dem Ventilgehäuse 27 und dem Gehäuseteil 18 kann alternativ auch durch einen spaltfreien Sitz des Ventilgehäuses 27 bzw. des Ventilkopfes 25 an dem Gehäuseteil 18 erreicht werden. In diesem Fall kann ein separates Dichtelement entbehrlich sein.

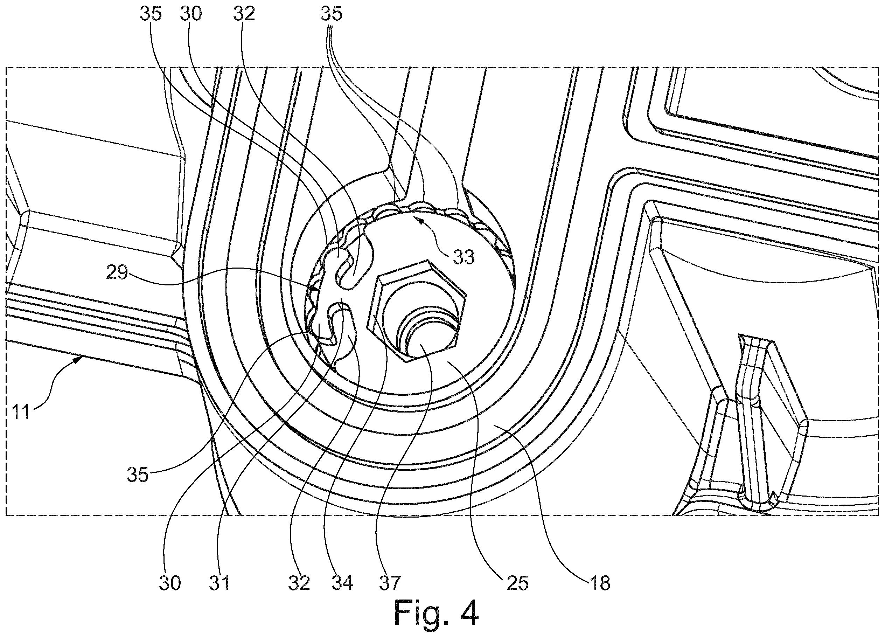

An dem Ventilkopf 25, vorteilhaft an dessen Umfangsseite, ist ein Rastmittel 29 vorgesehen. Das Rastmittel 29 umfasst hier zwei elastisch federnd über einen Steg 31 an dem Ventilkopf 25 angebrachte Rastfinger 30. Beim Einschrauben des Ventilgehäuses 27 in die Aufnahme 15 gelangen die Rastfinger 30 in Kontakt mit einer Umfangswand der Aufnahme 15 und werden zum Ventilkopf 25 hin in entsprechende Ausnehmungen 32 zwischen den Rastfingern 30 und dem Ventilkopf 25 gedrückt. An der Umfangswand der Aufnahme 15 ist vorteilhaft eine Raststruktur 33 mit über den Umfang verteilten Rastmulden 35 (siehe Fig. 4) vorgesehen. Bei vollständig in die Aufnahme 15 eingesetztem Ventilgehäuse 27 rasten die Rastfinger 30 in entsprechenden Rastmulden 35 ein, siehe Fig. 4, wobei im Betrieb auftretende Rüttelkräfte nicht ausreichen, um die Rastfinger 30 gegen die Federkraft aus den Rastmulden 35 zu lösen. Das Rückschlagventil 10 wird somit durch die Rastmittel 29, 33, 35 betriebssicher in der Aufnahme 15 gehalten.

Durch Aufwenden einer in Löserichtung gerichteten Lösekraft, beispielsweise mittels eines in der Werkzeugaufnahme 34 eingesetzten Werkzeugs, kann das Ventilgehäuse 27 aus der Aufnahme 15 herausgeschraubt werden, wobei die Rastkraft zwischen den Rastmitteln 29, 33, 35 überwunden wird. Das Ventilgehäuse 27 ist somit vorteilhaft lösbar in der Aufnahme 15 verrastet bzw. gehalten. Es sind auch Ausführungsformen denkbar, bei denen das Ventilgehäuse 27 unlösbar in der Aufnahme 15 verrastet bzw. gehalten ist, beispielsweise mittels eines in Umfangsrichtung wirkenden Schnapprastmittels.

Das Ventilgehäuse weist an seinem Endabschnitt 26 eine Mehrzahl voneinander beabstandete, axiale Stege 39 auf, zwischen denen der Ventilkörper axial verschiebbar gehalten ist. Die Stege 39 bilden somit eine axiale Führung für den Ventilkörper 37 aus. Im montierten Zustand des Ventils 20 kann der Endabschnitt 26 des Ventils 20 und die Stege 39 vorteilhaft vollständig über das Gehäuseteil 18 überstehen und erstrecken sich dann frei in den kurbelgehäuseseitigen Raum 16, wie am besten in Fig. 2 erkennbar ist. Dies ist jedoch keineswegs zwingend der Fall. In anderen Ausführungsformen steht der Endabschnitt 26 nicht wie oben beschrieben über, um vorteilhaft vor äußeren Manipulationen, beispielsweise beim Verbau, oder vor Spritzöl geschützt zu sein.

An ihren freien Enden weisen die Stege 39 nach innen geneigte Fortsätze 40 auf, die einen Sitz 41 für den Ventilkörper 37 im Ruhezustand des Motors ausbilden. Im Ruhezustand des Motors liegt der Ventilkörper 37 schwerkraftbedingt auf den Fortsätzen 40 bzw. dem Ventilsitz 41 auf und gibt einen maximalen Durchflussquerschnitt für das ablaufende Öl durch die Öffnungen 42 zwischen den Stegen 39 frei. Es ist somit sichergestellt, dass das in dem Ölabscheideraum 22 bzw. dem Ölsammelraum 14 gesammelte Öl im Ruhezustand des Motors im Wesentlichen vollständig ablaufen kann, wodurch die Einfriergefahr des Ventils 20 erheblich reduziert werden kann.

Wenn der Druck auf der Kurbelgehäuseseite 16 des Ventils 20 den Druck im Ölabscheideraum 22 so weit übersteigt, dass die auf den Ventilköper 37 wirkende Druckkraft seine Gewichtskraft übersteigt, wird der Ventilkörper 37 durch die Druckkraft angehoben und axial verschoben, bis der Ventilkörper 37 an einem oberen ringförmigen Ventilsitz 43 (siehe Fig. 2) anliegt, der vorteilhaft in dem Schaft 24 ausgebildet ist. Der Ventilsitz 43 kann beispielsweise von einer sich nach oben verjüngenden, kegelstumpfförmigen Innenfläche des Schafts 24 gebildet sein. Die von dem oberen Ventilsitz 43 umschlossene Durchgangsöffnung ist Teil der Durchgangsbohrung 36.

In der Verschlussstellung, in der der Ventilkörper 37 an dem oberen Ventilsitz 43 anliegt, ist die Durchgangsbohrung 36 durch den Ventilkörper 37 verschlossen und das Eindringen von ölbeladenem Gas vom Kurbelgehäuse in den Ölabscheideraum 22 bzw. den Reinraum 21 wird verhindert.

Das Ventil 20 weist genau zwei insbesondere durch Anschläge definierte Positionen des Ventilkörpers 37 auf, nämlich die Offenstellung mit maximalem Öldurchflussquerschnitt und die Geschlossenstellung. Bei jedem konstanten Relativdruck zwischen der Kurbelgehäuseseite 16 und dem Ölabscheideraum 22 kann der Ventilkörper 37 nur die Offenstellung oder die Geschlossenstellung einnehmen, aber keine andere Position. Wenn kein Druckunterschied vorliegt, ist der Ventilkörper 37 in der Offenstellung.

Nach dem zuvor Gesagten wird das Ölablassventil 20 ausschließlich durch Schwerkraft und Druckdifferenz zwischen der Kurbelgehäuseseite 16 und dem Ölabscheideraum 22, d.h. ohne Fremdenergie, betätigt. Das Ventil 20 ist somit vorteilhaft ungesteuert, nicht-magnetisch und nicht-elektrisch. Es handelt sich auch nicht um ein Schwimmerventil, da der Flüssigkeitsstand im Ölssammelraum 14 keinen Einfluss auf den Ventilkörper 37 hat.

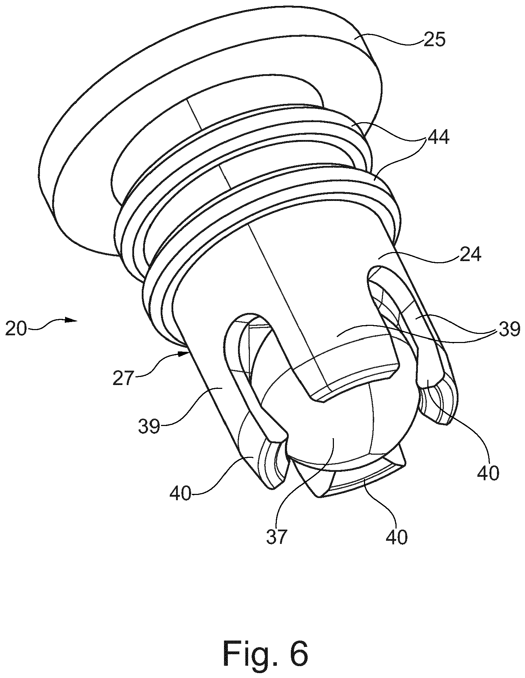

Andere Verbindungen als zwischen dem Ventilgehäuse 27 und der Aufnahme 15 sind möglich. So ist beispielsweise das Ventilgehäuse 27 in der Ausführungsform gemäß Fig. 6 in die Aufnahme 15 des Gehäuses 11 einsteckbar. Der Schaft 24 weist hier kein Schraubgewinde 38 auf, jedoch vorteilhaft ein oder mehrere Klemmelemente 44, hier zwei axial beabstandete Klemmringe, die an dem Außenumfang des Schafts angeformt sein können und ein geringes Übermaß gegenüber der Aufnahme 15 aufweisen. Das Klemmelement 44 kann vorteilhaft eine Elastomerbeschichtung aufweisen oder aus einem Elastomer bestehen, wodurch sowohl Nachgiebigkeit beim Einsetzen als auch Abdichtung erzielt wird.

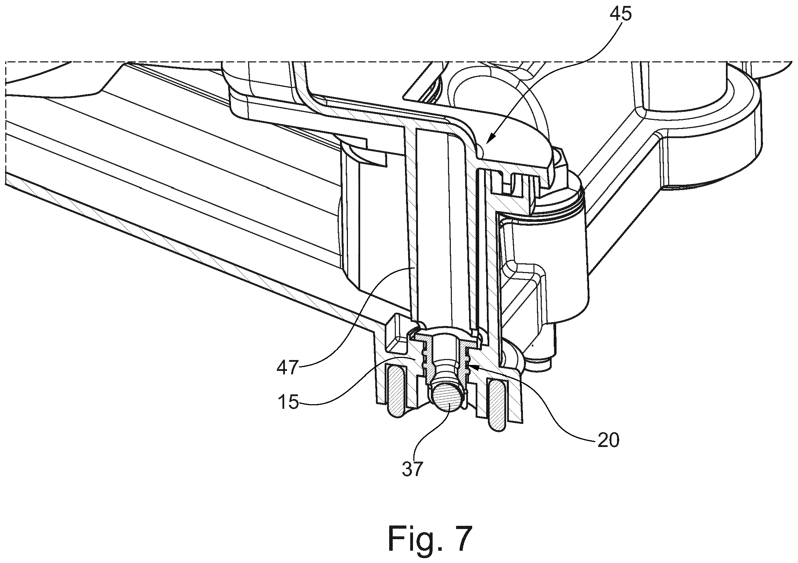

Um ein beispielsweise vibrationsbedingtes Auswandern des Ventils 20 aus der Aufnahme 15 zu verhindern, kann ein axial wirkendes Rastmittel, beispielsweise ein Schnapprastmittel, zwischen dem Ventilgehäuse 27 und der Aufnahme 15 vorgesehen sein. Alternativ kann ein Bauteil 45 der Zylinderkopfhaube 10 ein Sicherungsmittel 47 aufweisen, das im Betrieb mit geringem Abstand über dem Ventilkopf 25 angeordnet ist (siehe Fig. 7), so dass das Ventilgehäuse 27 bei einer Bewegung aus der Aufnahme 15 heraus an dem Sicherungsmittel 47 anschlägt. Das Bauteil 45 wird nach dem Einsetzen des Ventils 20 in die Aufnahme 15 montiert. In der Ausführungsform gemäß Fig. 1 kann beispielsweise an der Unterseite des Deckels 19 ein Pin, ein Absatz oder ein ähnliches Sicherungsmittel vorgesehen sein, das nach Montage des Deckels 19 mit geringem Abstand von der Oberseite des Ventilkopfes 25 angeordnet ist. Das das Sicherungsmittel 47 tragende Bauteil 45 ist nicht auf den Gehäusedeckel 19 oder andere Gehäuseteile beschränkt. Es kann sich beispielsweise auch um ein Teil des Ölabscheiders 13 oder eine Ölleiteinrichtung 45 (siehe Fig. 7) handeln.

## Patentansprüche

1. Rückschlagventil (20) für einen Ölrücklauf in der Kurbelgehäuseentlüftung eines Verbrennungsmotors, umfassend:
- ein Ventilgehäuse (27);
- einen Ventilkörper (37), der in dem Ventilgehäuse (27) zwischen einer Offenstellung und einer Schließstellung als Ganzes verschiebbar gehalten ist;
- der Ventilkörper (37) ist im Ruhezustand des Verbrennungsmotors vorspannungsfrei in der Offenstellung gehalten;
- der Ventilkörper (37) ist infolge eines Überdrucks an der Kurbelgehäuseseite (16) gegenüber dem Ölabscheideraum (22) zur selbsttätigen Verschiebung in die Schließstellung eingerichtet;
wobei das Rückschlagventil (20) zum Einsetzen in eine Aufnahme (15) einer Zylinderkopfhaube (10) des Verbrennungsmotors vorgesehen und eingerichtet ist, **dadurch gekennzeichnet, dass** das Ventilgehäuse (27) ein Rastmittel (29) zur Rastarretierung des Ventilgehäuses (27) in der Aufnahme (15) der Zylinderkopfhaube (10) aufweist, wobei das Rastmittel (29) mindestens einen elastisch federnd an dem Ventilkopf (25) angebrachten Rastfinger (30) umfasst, der beim Einsetzen des Ventilgehäuses (27) in die Aufnahme (15) in eine Ausnehmung (32) zwischen dem Rastfinger (30) und dem Ventilkopf (25) gedrückt wird.

2. Rückschlagventil nach Anspruch 1, **dadurch gekennzeichnet, dass** das Ventilgehäuse (27) Schraubmittel (38) zum Einschrauben in die Aufnahme (15) der Zylinderkopfhaube (10) aufweist.

3. Rückschlagventil nach einem der vorangehenden Ansprüche, **dadurch gekennzeichnet, dass** das Ventilgehäuse (27) in die Aufnahme (15) der Zylinderkopfhaube (10) einsteckbar ist.

4. Rückschlagventil nach einem der vorangehenden Ansprüche, **dadurch gekennzeichnet, dass** das Ventilgehäuse (27) zur klemmenden Verbindung mit der Aufnahme (15) der Zylinderkopfhaube (10) eingerichtet ist.

5. Rückschlagventil nach einem der vorangehenden Ansprüche, **dadurch gekennzeichnet, dass** der Ventilkörper (37) balloder kugelförmig ist.

6. Rückschlagventil nach einem der vorangehenden Ansprüche, **dadurch gekennzeichnet, dass** das Ventilgehäuse (27) an seinem Endabschnitt (26) eine Mehrzahl voneinander beabstandete, axiale Stege (39) aufweist, zwischen denen der Ventilkörper (37) axial verschiebbar gehalten ist.

7. Rückschlagventil nach Anspruch 6, **dadurch gekennzeichnet, dass** die Stege (39) einen Sitz (41) für den Ventilkörper (37) im Ruhezustand des Motors ausbilden.

8. Zylinderkopfhaube (10) für einen Verbrennungsmotor, umfassend einen Ölabscheider (13) und einen Ölrücklauf (17) zum Rückführen von abgeschiedenem Öl in einen Ölsumpf, **dadurch gekennzeichnet, dass** in dem Ölrücklauf (17) ein Rückschlagventil (20) nach einem der vorangehenden Ansprüche angeordnet ist.

9. Zylinderkopfhaube nach Anspruch 8, **dadurch gekennzeichnet, dass** die Zylinderkopfhaube (10) eine mittels eines Deckels (19) verschließbare Gehäuseöffnung aufweist, durch die das Rückschlagventil (20) in eine in der Zylinderkopfhaube (10) vorgesehene Aufnahme (15) einsetzbar ist.

10. Zylinderkopfhaube nach Anspruch 8 oder 9, **dadurch gekennzeichnet, dass** an einem Bauteil (45) der Zylinderkopfhaube (10) ein Sicherungsmittel (47) vorgesehen ist, das bei montiertem Bauteil (45) so relativ zu dem Ventilgehäuse (27) angeordnet ist, dass bei einer Lösebewegung des Ventilgehäuses (27) dieses an dem Sicherungsmittel (47) anschlägt.

11. Zylinderkopfhaube nach einem der Ansprüche 8 bis 10, **dadurch gekennzeichnet, dass** an einer Innenseite der Aufnahme (15) eine Raststruktur (33) mit über den Umfang verteilten Rastmulden (35) vorgesehen ist.

## Claims

1. Non-return valve (20) for an oil return in the crankcase ventilation system of a combustion engine, including:
- a valve housing (27);
- a valve body (37) which is mounted in the valve housing (27) so as to be displaceable as a whole between an open position and a closed position;
- the valve body (37) in the non-operating state of the combustion engine is maintained in the open position without preload;
- the valve body (37) is configured to automatically move to the closed position in case of an overpressure at the crankcase side (16) with respect to the oil separator chamber (22);
wherein the non-return valve (20) is provided and configured to be inserted into a mounting (15) of a cylinder head cover (10) of the combustion engine, **characterized in that** the valve housing (27) comprises latch means (29) for latching the valve housing (27) in the mounting (15) of the cylinder head cover (10), wherein the latch means (29) includes at least one latch finger (30) mounted in an elastically resilient manner on the valve head (25), which finger (30) is pressed into a recess (32) between the latch finger (30) and the valve head (25) when the valve housing (27) is inserted into the mounting (15).

2. Non-return valve according to claim 1, **characterized in that** the valve housing (27) comprises threaded means (38) for being screwed into the mounting (15) of the cylinder head cover (10).

3. Non-return valve according to any one of the preceding claims, **characterized in that** the valve housing (27) can be inserted into the mounting (15) of the cylinder head cover (10).

4. Non-return valve according to any one of the preceding claims, **characterized in that** the valve housing (27) is configured to establish a clamping connection with the mounting (15) of the cylinder head cover (10).

5. Non-return valve according to any one of the preceding claims, **characterized in that** the valve body (37) is ball-shaped or spherical.

6. Non-return valve according to any one of the preceding claims, **characterized in that** the valve housing (27) at its end portion (26) comprises a plurality of axial bars (39) spaced from one another, between which the valve body (37) is mounted so as to be axially displaceable.

7. Non-return valve according to claim 6, **characterized in that** the bars (39) form a seat (41) for the valve body (37) in the non-operating state of the engine.

8. Cylinder head cover (10) for a combustion engine, including an oil separator (13) and an oil return (17) for returning separated oil into an oil pan, **characterized in that** a non-return valve (20) according to any one of the preceding claims is located in the oil return (17).

9. Cylinder head cover according to claim 8, **characterized in that** the cylinder head cover (10) comprises a housing opening which can be closed by a lid (19), through which opening the non-return valve (20) can be inserted into a mounting (15) provided in the cylinder head cover (10).

10. Cylinder head cover according to claim 8 or 9, **characterized in that** a securing means (47) is provided on a component (45) of the cylinder head cover (10), which, when the component (45) is mounted, is located relative to the valve housing (27) such that upon a detaching movement of the valve housing (27) the same abuts against the securing means (47).

11. Cylinder head cover according to one of the claims 8 to 10, **characterized in that** a notched structure (33) with notch recesses (35) distributed over the circumference is provided on an inner surface of the mounting (15).

## Revendications

1. Clapet anti-retour (20) pour un retour d'huile dans le système de blowby du carter d'un moteur à combustion interne, comprenant :
- un boîtier de clapet (27) ;
- un corps de clapet (37), qui est maintenu dans le boîtier de clapet (27) de manière déplaçable dans son ensemble entre une position ouverte et une position fermée ;
- le corps de clapet (37) étant maintenu, lorsque le moteur à combustion interne est dans l'état de repos, dans la position ouverte sans précontrainte ;
- le corps de clapet (37) étant conçu pour se déplacer automatiquement dans la position fermée par suite d'une surpression côté carter (16) par rapport à l'espace de séparation d'huile (22) ;
le clapet anti-retour (20) étant prévu et conçu pour être inséré dans un logement (15) d'un couvercle de culasse (10) du moteur à combustion interne, **caractérisé en ce que** le boîtier de clapet (27) comporte un moyen de blocage (29) pour bloquer le boîtier de clapet (27) dans le logement (15) du couvercle de culasse (10), le moyen de blocage (29) comprenant au moins un doigt de blocage (30) attaché à la tête de clapet (25) de manière élastique, qui, lors de l'insertion du boîtier de clapet (27) dans le logement (15), est poussé dans un évidement (32) entre le doigt de blocage (30) et la tête de clapet (25).

2. Clapet anti-retour selon la revendication 1, **caractérisé en ce que** le boîtier de clapet (27) comporte des moyens de vissage (38) pour le vissage dans le logement (15) du couvercle de culasse (10).

3. Clapet anti-retour selon l'une des revendications précédentes, **caractérisé en ce que** le boîtier de clapet (27) peut être enfoncé dans le logement (15) du couvercle de culasse (10).

4. Clapet anti-retour selon l'une des revendications précédentes, **caractérisé en ce que** le boîtier de clapet (27) est conçu pour l'assemblage par serrage avec le logement (15) du couvercle de culasse (10).

5. Clapet anti-retour selon l'une des revendications précédentes, **caractérisé en ce que** le corps de clapet (37) est en forme de boule ou de forme sphérique.

6. Clapet anti-retour selon l'une des revendications précédentes, **caractérisé en ce que** le boîtier de clapet (27) comporte, sur sa partie d'extrémité (26), une pluralité de saillies (39) axiales espacées les unes des autres, entre lesquelles le corps de clapet (37) est maintenu déplaçable axialement.

7. Clapet anti-retour selon la revendication 6, **caractérisé en ce que** les saillies (39) forment un siège (41) pour le corps de clapet (37) lorsque le moteur est dans l'état de repos.

8. Couvercle de culasse (10) pour un moteur à combustion interne, comprenant un séparateur d'huile (13) et un retour d'huile (17) pour ramener de l'huile séparée dans un puisard, **caractérisé en ce qu'**un clapet anti-retour (20) selon l'une des revendications précédentes est disposé dans le retour d'huile (17).

9. Couvercle de culasse selon la revendication 8, **caractérisé en ce que** le couvercle de culasse (10) comporte une ouverture de boîtier, qui peut être fermée au moyen d'un couvercle (19), par laquelle le clapet anti-retour (20) peut être inséré dans un logement (15) prévu dans le couvercle de culasse (10).

10. Couvercle de culasse selon la revendication 8 ou 9, **caractérisé en ce qu'**un moyen de sûreté (47) est prévu sur un élément structural (45) du couvercle de culasse (10), ledit moyen de sûreté étant, lorsque l'élément structural (45) est monté, disposé par rapport au boîtier de clapet (27) de telle manière que lors d'un mouvement de desserrage du boîtier de clapet (27), celui-ci vient en butée contre le moyen de sûreté (47).

11. Couvercle de culasse selon l'une des revendications 8 à 10, **caractérisé en ce que**, sur une face intérieure du logement (15), une structure de blocage (33) avec des creux de blocage (35) distribués sur la circonférence est prévue.
